# Europäisches Patentamt
## European Patent Office
### Office européen des brevets

(11) Veröffentlichungsnummer: **0 425 759 B1**

## (12) EUROPÄISCHE PATENTSCHRIFT

(45) Veröffentlichungstag der Patentschrift: **31.08.94**

(51) Int. Cl.5: **F16F 13/00**

(21) Anmeldenummer: **90110440.6**

(22) Anmeldetag: **01.06.90**

(54) **Hydraulisch dämpfende Hülsengummifeder.**

(30) Priorität: **02.11.89 DE 3936347**

(43) Veröffentlichungstag der Anmeldung:
**08.05.91 Patentblatt 91/19**

(45) Bekanntmachung des Hinweises auf die
Patenterteilung:
**31.08.94 Patentblatt 94/35**

(84) Benannte Vertragsstaaten:
**AT BE CH DE ES FR GB IT LI NL SE**

(56) Entgegenhaltungen:
FR-A- 2 375 501
GB-A- 2 193 553

PATENT ABSTRACTS OF JAPAN vol. 11, no.
296 (M-627)(2743) 25 September 1987,& JP-
A-62 88834 (BRIDGESTONE CORP) 23 April
1987,

PATENT ABSTRACTS OF JAPAN vol. 13, no.
217 (M-828)(3565) 22 Mai 1989,

& JP-A-135140 (TOYOTA MOTOR CORP) 6
Februar 1989,

(73) Patentinhaber: **Firma Carl Freudenberg**
**Höhnerweg 2-4**
**D-69469 Weinheim (DE)**

(72) Erfinder: **Hamaekers, Arno**
**Siedlungsstrasse 60**
**D-6946 Gorxheimertal (DE)**
Erfinder: **Rudolph, Axel**
**Buchenhorst 1**
**D-6100 Darmstadt (DE)**

## Beschreibung

Die Erfindung betrifft eine hydraulisch dämpfende Hülsengummifeder nach dem Oberbegriff von Anspruch 1.

Eine solche Hülsengummifeder ist aus der JP-A-62-88834 bekannt. Hierbei ist das Innenrohr gegenüber dem Außenrohr mittels eines gummielastischen Federkörpers abgestützt. Ferner umfaßt die hydraulisch dämpfende Hülsengummifeder zwei axial im Abstand angeordnete, flüssigkeitsgefüllte Kammerpaare, wobei die Kammern jedes Kammerpaares in Richtung der eingeleiteten Schwingungen durch eine erste, nachgiebige Trennwand voneinander isoliert sind. Zwischen den axial beabstandeten Kammerpaaren ist eine zweite, radial verlaufende Trennwand vorgesehen. Diese Trennwand ist fest mit dem Außenrohr verbunden. Bei der betriebsbedingten Einleitung von Schwingungen ist diese zweite Trennwand Wechselbelastungen ausgesetzt, die aus Zug- und Druckbelastungen bestehen. Insbesondere durch die Zugbelastungen wird die Dauerhaltbarkeit dieser hydraulisch dämpfenden Hülsengummifeder herabgesetzt und es können im Laufe der Gebrauchsdauer Risse an der zweiten Trennwand. Hierdurch geht die gewünschte Dämpfungswirkung verloren.

Aus der EP 0 009 120 ist eine Hülsengummifeder bekannt, die nur in einem eng begrenzten Frequenzbereich eine Dämpfungswirkung aufweist. Auch ist die Dauerhaltbarkeit wenig befriedigend und es wird insbesondere immer wieder das Auftreten von sich quer zur Richtung der betriebsbedingt eingeleiteten Schwingungen erstreckenden Rissen in der Trennwand beobachtet. Die Dämpfungswirksamkeit kommt hierdurch zum Erliegen.

Der Erfindung liegt die Aufgabe zugrunde, eine solche Hülsengummifeder derart weiter zu entwickeln, daß über lange Zeiträume eine gute Dämpfungswirksamkeit in einem deutlich vergrößerten Frequenzbereich eingeleiteter Schwingungen gewährleistet ist.

Diese Aufgabe wird erfindungsgemäß bei einer Hülsengummifeder nach dem Oberbegriff mit den kennzeichnenden Merkmalen von Anspruch 1 gelöst. Auf vorteilhafte Ausgestaltungen nehmen die Unteransprüche Bezug.

Bei der erfindungsgemäßen hydraulisch dämpfenden Hülsengummifeder sind die Dämpfungsöffnungen jeweils so dimensioniert und an die summierte Ausbauchungselastizität der Wandungen der beiderseits anschließenden Kammern angepaßt, daß die enthaltenen Flüssigkeitsmassen bei zwei voneinander abweichenden Frequenzen der eingeleiteten Schwingungen in eine Resonanzbewegung gelangen, daß die Trennwand das Außenrohr bei Nichteinleitung von Schwingungen lose anliegend berührt und durch das Außenrohr in Richtung des Innenrohrs elastisch verformt ist und daß die Verformung kleiner ist als die maximale Auslenkbarkeit des Innenrohrs in bezug auf das Außenrohr.

Bei Extremausschlägen ergibt sich hierdurch eine Spaltverbindung zwischen den beiderseits angrenzenden Kammern, was einen Druckausgleich bewirkt und eine gleichmäßige Belastung der Hülsengummifeder in allen Teilbereichen während ihrer normalen Verwendung sicherstellt. Die Dämpfungsöffnungen können jeweils derart dimensioniert und an die summierte Ausbauchungselastizität der Wandungen der Kammern angepaßt sein, daß die enthaltenen Flüssigkeitsmassen bei zwei voneinander abweichenden Frequenzen der eingeleiteten Schwingungen in eine Resonanzbewegung gelangen.

Die Hülsengummifeder weist hierdurch zwei Dämpfungsmaxima auf und eine dementsprechende Dämpfungswirksamkeit in zwei Bereichen. Diese können je nach Ausbildung so eng zusammengelegt werden, daß sich eine ineinander übergehende Dämpfungswirkung in einem besonders großen Frequenzbereich ergibt oder soweit beabstandet, daß sich eine gute Dämpfungswirkung in zwei Frequenzbereichen von Schwingungen ergibt, die in besonderem Maße störend in Erscheinung treten und der Dämpfung bedürfen.

Die Randbedingungen der im einzelnen vorzunehmenden Abstimmung sind dem Fachmann bekannt. Sie vollziehen sich auf der Grundlage der Formel

$$\omega_0 = \sqrt{\frac{c}{m}}$$

in der $\omega_0$ die Resonanzfrequenz der in der Dämpfungsöffnung enthaltene Flüssigkeitsmasse beschreibt, $m$ die Masse der Flüssigkeit und $c$ die summierte Ausbauchungselastizität der nachgiebigen Wandungen eines jeden Kammerpaares. Die Resonanzfrequenz $\omega_0$ soll möglichst weitgehend derjenigen Frequenz betriebsbedingt eingeleiteter Schwingungen entsprechen, die sich in besonders störender Weise bemerkbar macht und der Dämpfung bedarf. Sie kann in Abhängigkeit von dem vorgegebenen Anwendungsfall unterschiedliche Werte annehmen.

Die Trennwand liegt bei Nichteinleitung von Schwingungen dichtend, jedoch lose an der Innenwandung des Außenrohres an, wobei sie von dem Außenrohr in Richtung des Innenrohres elastisch deformiert wird. Werden Schwingungen einer üblichen Größenordnung eingeleitet, so erfährt die dichtende Berührung des Außenrohres keinerlei Veränderung, wodurch die vorstehend angesprochene Dämpfungswirksamkeit in vollem Maß erhalten bleibt.

Bei Einleitung von Schwingungen in die Hülsengummifeder, welche extrem große Relativverlagungen des Innenrohres in bezug auf das Außenrohr zur Folge haben, erfährt der dem Innenrohr in Richtung von dessen Ausweichbewegung vorgelagerte Teil der Trennwand eine noch stärkere Verformung und dichtende Anpressung als zuvor, während der gegenüberliegende Teil der Trennwand von der Innenseite des Außenrohres abhebt und eine Spaltverbindung zwischen den beiderseits angrenzenden Kammern freigibt. Die in die Resonanzfrequenzen der in den Dämpfungsöffnungen enthaltenen Flüssigkeitsmassen eingehenden, nach der Formel

$$\frac{1}{C_{ges}} = \frac{1}{c_1} + \frac{1}{c_2}$$

summarisch einzusetzenden Ausbauchungselastizitäten der Wandungen der Kammern können hierdurch eine Veränderung erfahren, was eine Relativverlagerung des jeweiligen Dämpfungsmaximums zur Folge hätte. Auch eine solche Verlagerung kann jedoch im Hinblick auf die weiterhin gewährleistete Dämpfungswirkung an sich sowie im Hinblick auf die Vermeidung von Zugspannungsrissen in der Trennwand im allgemeinen ohne weiteres in Kauf genommen werden. Sie läßt sich ganz vermeiden, wenn die Ausbauchungselastizitäten aller Kammern von übereinstimmender Größe und die Dämpfungsöffnungen zur vorgeschriebenen Erzielung voneinander abweichender Resonanzfrequenzen in einer voneinander abweichenden Weise dimensioniert sind.

Die Trennwand kann in dem das Außenrohr berührenden Verformungsbereich ein quer zur Richtung der betriebsbedingt eingeleiteten Schwingungen vorgezogenes, bogenförmiges Profil haben.

Senkrechte Stauchbeanspruchungen der Trennwand und mechanische Überlastungen während der Einleitung von Schwingungen lassen sich hierdurch unterbinden, was die Erzielung einer guten Dauerhaltbarkeit begünstigt.

Als besonders zweckmäßig hat es sich erwiesen, wenn die Trennwand das Außenrohr mit einer Dichtlippe berührt, zweckmäßig mit einer Dichtlippe, welche das Außenrohr quer zur Richtung der betriebsbedingt eingleiteten Schwingungen verschiebbar berührt. Bei Gewährleistung einer guten Abdichtung der beiderseits angrenzenden Kammern unter normalen Betriebsbedingungen wird hierdurch dem Auftreten von Stauchspannungen in der Trennwand noch mehr vorgebeugt.

Der Gegenstand der Erfindung wird nachfolgend anhand der in der Anlage beigefügten Zeichnung weiter erläutert. Es zeigen:

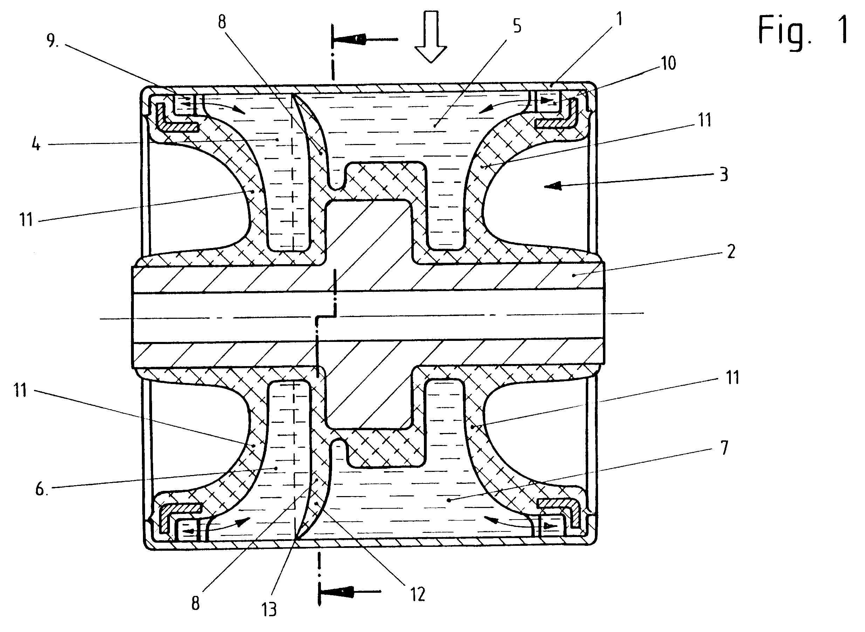

Figur 1 eine Hülsengummifeder in längsgeschnittener Darstellung.

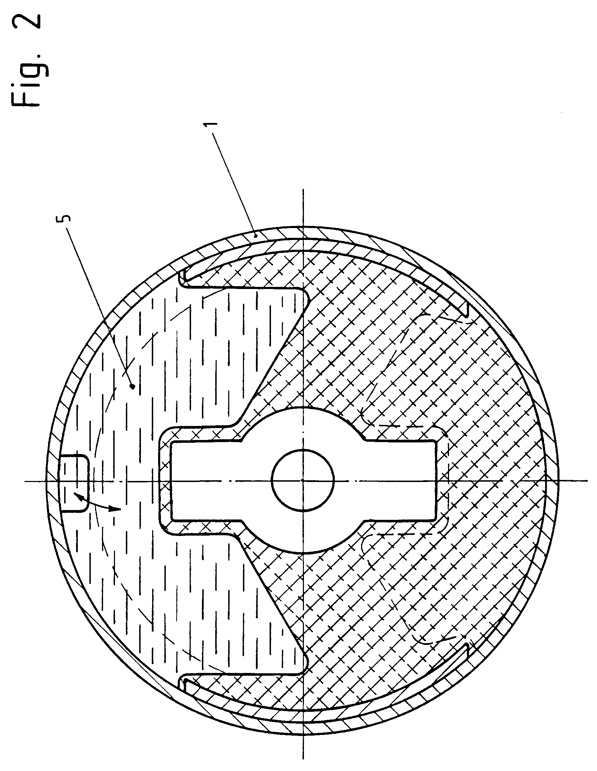

Figur 2 die Hülsengummifeder nach Figur 1 in quergeschnittener Darstellung entlang der Linie A-A.

Figur 3 die teilweise längsgeschnittene Darstellung der Hülsengummifeder nach Figur 1 beim Auftreten einer extremen Ausweichbewegung des Innenrohres in bezug auf das Außenrohr.

Die in der Zeichnung dargestellte Hülsengummifeder umfaßt ein Außen- und ein Innenrohr 1, 2 die durch einen gummielastischen Federkörper 3 aufeinander abgestützt sind, wobei in dem Federkörper 3 zwei flüssigkeitsgefüllte Kammerpaare 4, 6; 5, 7 vorgesehen sind, wobei die Kammerpaare in Richtung der betriebsbedingt eingeleiteten, durch einen offenen Pfeil angedeuteten Schwingungen durch eine nachgiebige Trennwand 8 voneinander isoliert sind und aus Kammern 4, 5, 6, 7 bestehen, die in Richtung der eingeleiteten Schwingungen einen Abstand voneinander haben und wobei die Kammern 4, 5, 6, 7 eines jeden Kammerpaares 4, 6; 5, 7 durch eine kanalartig ausgebildete Dämpfungsöffnung 9, 10 verbunden sind. Die beiden Dämpfungsöffnungen 9, 10 sind jeweils so dimensioniert und an die summierten Ausbauchungselastizitäten der Wandungen 11 der beiderseits anschließenden Kammern 4, 5, 6, 7 angepaßt, daß die in ihnen enthaltenen Flüssigkeitsmassen bei voneinander abweichenden Frequenzen der betriebsbedingt eingeleiteten Schwingungen in eine Resonanzbewegung gelangen. Die Trennwand 8 bildet einen einstückigen Bestandteil des gummielastischen Federkörpers 3 und ist ebenso wie dieser mit dem Innenrohr 2 durch unmittelbares Anvulkanisieren verbunden. Die Trennwand 8 liegt bei Nichteinleitung von Schwingungen dichtend, jedoch lose an der Innenseite des Außenrohres 1 an, wobei sie von dem Außenrohr in Richtung des Innenrohres 2 elastisch verformt wird. Bei Ausweichbewegungen beliebiger Größe des Innenrohres 2 in bezug auf das Außenrohr 1 kann es hierdurch nicht zum Auftreten von Zugspannungen in irgendeinem Teilbereich der Trennwand 8 kommen. Dem Auftreten von Zugspannungsrissen in der Trennwand wird hierdurch vorgebeugt.

Derjenige Teil der Trennwand 8, der dem Innenrohr 2 in Richtung einer sich betriebsbedingt ergebenden, Relativverlagerung des Innenrohres 2 in bezug auf das Außenrohr 1 vorgelagert ist, erfährt in einem solchen Falle eine elastische Verformung und Verkürzung in der angegebenen Richtung.

Die gegenseitige Isolierung der beiderseits angrenzenden Kammern wird hierdurch nicht verändert, was eine Aufrechterhaltung der voneinander unabhängigen Dämpfungswirksamkeit der Dämpfungsöffnungen 9 und 10 bedingt.

Die diesbezüglichen Gegebenheiten bleiben unverändert erhalten, wenn die Ausweichbewegungen des Innenrohres 2 in bezug auf das Außenrohr 1 eine Amplitude haben, die kleiner ist als die Verformung der Trennwand 8 durch das Außenrohr 1. In diesem Falle bleibt auch auf der dem vorstehend beschriebenen Abschnitt gegenüberliegenden Seite der Trennwand 8 stets eine dichtende Berührung zwischen der Trennwand 8 und der Innenseite des Außenrohres 1 erhalten.

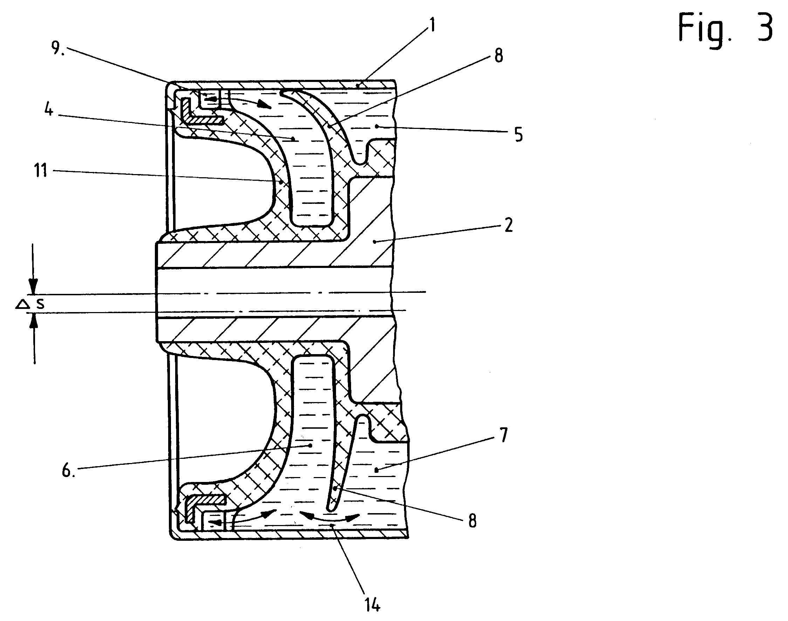

Eine Veränderung der diesbezügichen Bedingungen ergibt sich erst dann, wenn die Relativverlagerung des Innenrohres 2 in bezug auf das Außenrohr 1 eine Amplitude erreicht, die größer ist als die sich im schwingungsfreien Zustand ergebende, durch das Außenrohr 1 bedingte elastische Verformung der Trennwand 8. Es kommt dann zum Abheben der Trennwand 8 von der Innenseite des Außenrohres 1 auf der der Richtung der Relativbewegung des Innenrohres 2 entgegengesetzten Seite und somit zur Ausbildung einer flüssigkeitsleitenden Verbindung zwischen den beiderseits angrenzenden Kammern 4, 5. Falls die Kammern 4, 5 durch Wände 11 in axialer Richtung begrenzt sind, die eine voneinander abweichende Ausbauchungselastizität haben, ergibt sich in diesem Falle eine Veränderung der Resonanzfrequenz der in den Dämpfungsöffnungen 9 und 10 enthaltenen Flüssigkeitsmassen. Sind hingegen die beiderseitigen Begrenzungswände 11 von übereinstimmender Ausbauchungselastizität und die Dämpfungsöffnungen 9, 10 in einer voneinander abweichenden Weise gestaltet, dann bleibt auch in einem solchen Falle die ursprünglich vorgegebene Resonanzfrequenz der in den beiden Dämpfungsöffnungen 9 und 10 enthaltenen Flüssigkeitsmassen erhalten und als Ergebnis hiervon eine unveränderte Dämpfungswirksamkeit. Da die Gefahr des Auftretens von Zugspannungsrissen in der Trennwand 8 eliminiert ist, kann diese auch im langfristigen Gebrauch keine Veränderung erfahren, was von großem Vorteil ist. Das Auftreten einer Extrembewegung des Innenrohres 2 in bezug auf das Außenrohr 1 ist in Figur 3 in zeichnerischer Weise angedeutet. Die Ausweichbewegung als solche ist mit s bezeichnet, die sich ergebende Spaltverbindung zwischen den beiderseits an die Trennwand 8 angrenzenden Kammern 6, 7 mit 14.

## Patentansprüche

1. Hydraulisch dämpfende Hülsengummifeder, umfassend ein Außen- (1) und ein Innenrohr (2), die durch einen gummielastischen Federkörper (3) aufeinander abgestützt sind, wobei in dem Federkörper (3) mindestens zwei fküssigkeitsgefüllte Kammerpaare (4 und 6; 5 und 7) vorgesehen sind, wobei die Kammerpaare (4 und 6; 5 und 7) in Richtung der eingeleiteten Schwingungen durch eine nachgiebige Trennwand (8) voneinander isoliert sind und aus Kammern (4, 5, 6, 7) bestehen die einen Abstand voneinander haben und wobei die Kammern (4, 5, 6, 7) eines jeden Kammerpaares (4 und 6; 5 und 7) durch eine kanalartig ausgebildete Dämpfungsöffnung untereinander verbunden sind, dadurch gekennzeichnet, daß die Dämpfungsöffnungen ( 9, 10) jeweils so dimensioniert und an die summierte Ausbauchungselastizität der Wandungen (11) der beiderseits anschließenden Kammern (4, 5, 6, 7) angepaßt sind, daß die enthaltenen Flüssigkeitsmassen bei zwei voneinander abweichenden Frequenzen der eingeleiteten Schwingungen in eine Resonanzbewegung gelangen, daß die Trennwand (8) das Außenrohr bei Nichteinleitung von Schwingungen lose anliegend berührt und durch das Außenrohr (1) in Richtung des Innenrohrs (2) elastisch verformt ist und daß die Verformung (12) kleiner ist als die maximale Auslenkbarkeit des Innenrohrs (2) in bezug auf das Außenrohr (1).

2. Hülsengummifeder nach Anspruch 1, dadurch gekennzeichnet, daß die Trennwand (8) im Bereich der Verformung (12) ein bogenförmiges Profil hat.

3. Hülsengummifeder nach Anspruch 1 bis 2, dadurch gekennzeichnet, daß die Trennwand (8) das Außenrohr (1) mit einer Dichtlippe (13) berührt.

## Claims

1. A hydraulically damped rubber bushing comprising an outer tube (1) and an inner tube (2) which are supported on one another by a rubber-elastic spring body (3), at least two fluid-filled pairs (4 and 6; 5 and 7) of chambers being provided in the spring body (3), the pairs (4 and 6; 5 and 7) of chambers being isolated from one another, in the direction of the vibrations introduced, by a flexible dividing wall (8) and comprising chambers (4, 5, 6, 7) which are spaced apart, and the chambers (4, 5, 6, 7) of each pair (4 and 6; 5 and 7) of chambers being connected to one another by a damping opening in the form of a passage, characterized in that each of the damping openings (9, 10) is dimensioned and matched to the total bulging elasticity of the walls (11) of the chambers (4, 5, 6, 7) at both ends in such a way that, if the vibrations introduced have two different frequencies, the fluid masses contained therein adopt a resonant motion, in that the dividing wall (8) touches the outer tube, resting loosely against it, in the absence of vibrations and is elastically deformed by the outer tube (1) in the direction of the inner tube (2), and in that the deformation (12) is smaller than the maximum possible deflection of the inner tube (2) in relation to the outer tube (1).

2. A rubber bushing according to claim 1, characterized in that the dividing wall (8) has an arcuate profile in the region of the deformation (12).

3. A rubber bushing according to either of claims 1 or 2, characterized in that the dividing wall (8) touches the outer tube (1) by means of a sealing lip (13).

**Revendications**

1. Manchon élastique à amortissement hydraulique, comportant un tube extérieur (1) et un tube intérieur (2), qui sont appuyés l'un contre l'autre par l'intermédiaire d'un élément formant ressort (3), ayant l'élasticité du caoutchouc et dans lequel il est prévu au moins deux paires de chambres (4 et 6 ; 5 et 7) remplies de liquide, les paires de chambres (4 et 6 ; 5 et 7) sont isolées l'une de l'autre dans la direction des oscillations appliquées par une paroi séparatrice souple (8) et se composent de chambres (4, 5, 6, 7) qui sont espacées l'une de l'autre, les chambres (4, 5, 6, 7) de chaque paire de chambres (4 et 6 ; 5 et 7) étant reliées entre elles par une ouverture d'amortissement agencée en forme de canal, caractérisé en ce que les ouvertures d'amortissement (9, 10) sont respectivement dimensionnées et sont adaptées à l'élasticité totale de déformation des parois (11) des chambres (4, 5, 6, 7) en liaison des deux côtés de telle sorte que les masses de liquide contenues soient soumises, dans le cas où les oscillations appliquées ont deux fréquences différentes l'une de l'autre, à un mouvement de résonance de telle sorte que la paroi séparatrice (8) repose librement contre le tube extérieur en cas de non-application d'oscillations et soit élastiquement déformée par le tube extérieur (1) en direction du tube intérieur (2) et que la déformation (12) soit plus petite que la possibilité maximale d'écartement du tube intérieur (2) par rapport au tube extérieur (1).

2. Manchon élastique selon la revendication 1, caractérisé en ce que la paroi séparatrice (8) a un profil incurvé dans la zone de la déformation (12).

3. Manchon élastique selon les revendications 1 et 2, caractérisé en ce que la paroi séparatrice (8) est en contact avec le tube extérieur (1) par une lèvre d'étanchéité (13).

Fig. 1

EP 0 425 759 B1

Fig. 2

EP 0 425 759 B1

Fig. 3